# EUROPEAN PATENT APPLICATION

(11) **EP 1 310 841 A1**
(43) Date of publication of application: **14.05.2003**
(21) Application number: 01811085.8
(22) Date of filing: 12.11.2001
(51) Int. Cl.: G05B 19/042, G05B 19/05

(54) **Method to generate new structures from existing structures in a computerized system**

(71) Applicant: ABB RESEARCH LTD., 8050 Zürich (CH)
(72) Inventor: Fay, Alexander, 69469 Weinheim (DE); Naedele, Martin, 8048 Zürich (DE); Vetter, Claus, 5405 Baden-Dättwil (CH)
(74) Representative: ABB Patent Attorneys

(57) **Abstract**

A method to generate new structures from at least one already existing structures in a computerized system and a computer program product for performing the method when run on a computer are provided. The method uses a generating expression to derive the new structure and the relevant information to fill that new structure from the at least one existing structure and comprises the steps of querying the objects in the at least one existing structure for at least one aspect that is relevant to the new structure; linking the objects containing at least one aspect that is relevant to the new structure to the new structure by creating a new structure aspect for these objects; and linking the objects to each other in the new structure in a parent-child hierarchy according to the aspect type of their respective new structure aspects. New objects can be created and added to the new structure and the new structure can be updated in respect to objects that have been added to the existing structure after the new structure had been generated.

## Description

### TECHNICAL FIELD

The present invention is concerned with a computerized system. An example for a computerized system is a computerized system for control which may be used for controlling a number of single devices, an object in a process, a complete equipment, in any location including a home, as well as a process or an industrial installation such as a steel mill, a paper mill, or an automated factory. Particularly, the present invention provides a method for integrating many and varied types of information within a computerized system, and within the computerized system employing the method. More particularly, the present invention is a method for creating structures to group and sort information within the computerized system.

### BACKGROUND ART

Two general themes in the operation of complex systems such as industrial plants as well as management systems are information availability and information integration. This means that information must be available at the right place at the right time independent of where the information comes from. This leads to several requirements. Firstly, it must be possible to seamlessly integrate information from any combination of existing sources. Secondly it must be possible to integrate new sources such as applications in a straightforward way - without having to undergo lengthy and difficult efforts to update the existing system to include these new applications.

Particularly in plant operations as well as asset lifecycle management it is a central problem to keep together, manage, and have access to information about all different aspects of a great number of plant and process entities. These entities, or real world objects, are of many different kinds. They can be physical process objects, like a valve, or more complex, like a reactor. Other examples are products, material, batches, manufacturing orders, customer accounts, etc.

Each of these real world objects can be described from several different perspectives. Each perspective defines a piece of information, and a set of functions to create, access, and manipulate this information. In the following this will be called *Aspect* of the object. Thus a real world object can be represented by a first software object, called *Composite Object,* which contains several aspects that represent facets of the real world object.

It is necessary to be able to implement these aspects using many different applications, existing and new ones, also from third parties, now and in the future. It is desirable to be able to do this without changes to the applications. It is not reasonable to require that all these different applications are aware of each other. Still, the applications must cooperate to provide an integrated view and functionality of the object.

The document WO 01/02953 A1 which herewith is incorporated in its entirety by reference attacks this problem. In this concept, rather than creating one single object or data model in the system to represent the real world object, each aspect is modeled separately. An *Aspect Object* is thus not an object in a strict sense of object oriented programming but rather a container of references to implementations of the different aspects.

Aspects are implemented by software systems called *Aspect Systems,* each of which stores, manages and presents its information in its own optimal way. The environment in which aspect systems are integrated is called the *Aspect Framework.*

An aspect system defines one or several *Aspect Types,* each representing the implementation of the functionality of a certain aspect. This implementation is provided by an object, referred to as an *Aspect System Object* (ASO), which is for example a COM compliant object and thus a second software object that is different to the function of the first software object, the composite object, the function of which is to represent a real world object by acting as a container for aspects. Stated differently, the aspect type contains the binding information between an aspect and the one or more applications that implement its functionality. Of each aspect type, one or more *Aspect Categories* can be defined as different specializations. For example, an aspect system Process Graphics implements the aspect types Graphic Display, Faceplate, and Display Element, where the aspect type Graphic Display includes the categories Overview, Group, and Object Display. The aspect type Word Document has different aspect categories representing templates for different types of documents.

Aspect systems present their functionality for example as COM objects which is a published standard. But COM in itself does not provide the application independence that is required - to use the functions of a COM object a client application must know the identity of that object. In contrast to this, in the aspect object architecture according to WO 01/02953, aspect systems cooperate with other aspect systems without knowing which they are, or even how many they are. To make this possible, they do not interact directly with each other, but only with the aspect framework.

This framework includes an *Aspect Directory.* When an aspect system is installed, it registers with the aspect directory the aspect types that it supports. To perform an operation on an aspect object, an application (e.g. an aspect system) invokes a framework interface for that operation. Using information in the aspect directory, the framework then invokes the corresponding interfaces of all aspect systems that are concerned by that particular operation for that particular object. Thus, to copy and paste an object, for example, all aspect systems that implement aspects that are defined for that object are involved and perform their part of the operation.

The result is a system of integrated but independent software systems. It is open, so that new software systems that were not even anticipated from start can be added without changing or recompiling the ones that are already in place. The user works with objects that are familiar to her or him, i.e., valves, reactors, products, customers, etc., rather than with the implementation objects that realize the individual aspects.

The document WO 01/02953 A1 also discloses a way to represent and manage the relations between different entities. This functions via organizing them in a *Structure.* Depending on what aspect one looks at, the same entity fits naturally in several different structures. For example, a number of composite objects representing parts of one physical system may be conveniently grouped as a *Physical Structure.* As another example, a number of composite objects can be arranged in a structure according to their location in a plant, i.e. in a *Location Structure.* As another example, a number of composite objects can be arranged in a structure according to their control communication network, i.e. in a *Control Structure.* As another example, a number of composite objects can be arranged in a structure according to their electric power supply, i.e. in a *Electrical Wiring Structure.* As another example, a number of composite objects can be arranged in a structure according to the display on the operator station, i.e. in a *Display Structure.* And so on.

In order to dynamically move an object between different positions in the same or to a different structure - for example representing products moving through an assembly line, or production orders being allocated to different process equipment - the relation of the object to each structure has to be defined. This relation to a certain structure is again represented by an aspect. By adding several *Structure Aspects* to an aspect object, the object can be placed in several structures, or even in several positions within the same structure. By dynamically adding, deleting, and changing structure aspects, the object can be inserted in, or deleted from, or moved to different positions in a structure.

Thus WO 01/02953 A1 discloses a way to effectively model many and various types of plants, equipment, products, processes and procedures by arranging aspect objects in various structures. However, there is a major drawback. The generation of the various structures in which the respective objects are placed is a tedious work because the engineer has to build these structures independently and place the composite objects in one or several of these structures. According to the above mentioned structure examples, a composite object representing a sensor can have a certain position in the location structure (e.g. in a certain room), a certain position in the physical structure (e.g. at a boiler), a certain position in the wiring structure (e.g. attached to the supply cable that feeds all sensors in a certain area), and a certain position in the control structure (e.g. a particular control loop). When instantiating such a composite object, i.e. placing an instance of the composite object type in the current application, the engineer has to place the object manually and separately into the correct position in each if these structures. Although the different structures may have some overlap, i.e. certain branches might be similar, they are usually not identical. Therefore, all structures have to be built individually which leads to additional tedious and time consuming work.

According to the SIMATIC PCS 7 Process Control System Catalogue (http://www.ad. siemens.de/simatic_html76/grafik/intro/prozessl/kat2000op.pdf), p. 9, whilst engineering the SIMATIC PCS 7 Process Control System, the *Display Structure* (there called display hierarchy) can be automatically derived from the *Physical Structure* (there called technological hierarchy), which saves engineering time. However, the display structure resembles the physical structure in a straightforward manner because operators are used to this view. Furthermore no other derived structures are mentioned. In addition to that, the technological hierarchy and the display hierarchy according to SIMATIC PCS 7 are independent structures with independent objects, and the features disclosed in WO 01/02953, especially the feature of objects belonging to more than one structure, are neither made use of nor even mentioned.

There is thus a need for a facility in automated systems that allows a general derivation of structures from other structures, with objects being part of more than one structure, without having to build these structures manually.

### SUMMARY OF THE INVENTION

It is thus an object of the present invention to provide a facility for automatically deriving new structures from other structures.

This is achieved by a method with the features as described in claim 1 and a computer program product according to claim 5 performing the method. The present invention discloses a method that derives a new structure and the information to fill that new structure from at least one already existing structure and optionally from additional sources describing information about the system. In order to derive the new structure and the information to fill that structure the method makes use of a *Generating Expression* which is a function with multiple input parameters each of which covers certain information about the system. Such a generating expression can be formulated using any programming language and a simple code example will be given below.

According to the present invention the method to generate a new structure from at least one already existing structure in a computerized system - wherein each structure consists of composite objects each of which represents a real world object and which contains aspects representing facets of the real world object as well as structure aspects representing the location of the composite object in particular structures - uses the generating expression to derive the new structure and the relevant information to fill that new structure from the at least one existing structure and comprises the following steps of:
- querying objects in the at least one existing structure for at least one aspect that is relevant to the new structure,
- linking said objects containing at least one aspect that is relevant to the new structure to the new structure by creating a new structure aspect for these objects, and
- linking the objects to each other in the new structure in a directed acyclic graph according to the semantics of their respective new structure aspects.

In a another embodiment the method includes the further step of creating new objects in the new structure from querying the objects in the at least one existing structure for at least one aspect that is relevant to the new structure.

The computer program product is stored in a computer readable medium in a computerized system for performing the method when run on a computer.

### BRIEF DESCRIPTION OF THE DRAWINGS

In the following the present invention will be described in more detail in connection with the enclosed drawings in which
- Fig. 1: shows the different positions of a certain object (a valve) in different structures of a plant;
- Fig. 2: shows the transition from an object with its various aspects including a first structure aspect to the same object with a second structure aspect added;
- Fig. 3: shows an example for a transition from a first structure (the *Physical Structure)* to a second structure (the *Electrical Structure)* and illustrates how some objects of the first structure are dropped in the second structure while some new objects are added to the second structure.
- Fig. 4: shows how generating expressions are used in connection with the structures from Fig. 3.

### DESCRIPTION OF THE PREFERRED EMBODIMENTS

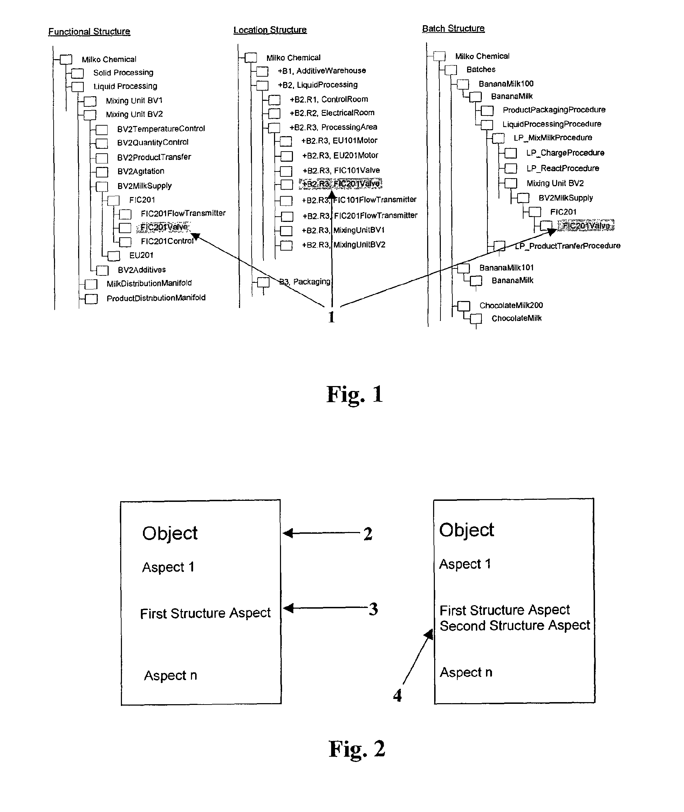

Fig. 1 illustrates how an object can be placed at different positions in different structures depending on what aspect of the object is important from a certain point of view. In this example the object, i.e. a certain piece 1 of process equipment, is a valve (FIC201 VALVE) in a milko chemical plant. The valve 1 has a certain position in a *Functional Structure* of the plant depending on the functional breakdown of the plant. It is also physically placed somewhere, and thus it has a certain place in a *Location Structure* of the plant. The same piece of equipment may currently be allocated to a certain production batch, so it has a certain place in the *Batch Structure.*

As can be seen from Fig. 1 structures are *hierarchical*. In Fig. 1 the structure can be defined by parent-child relations between the objects. In the most general case the dependency between objects is represented by a directed acyclic graph. As already mentioned, the relation of an object to a certain structure, i.e. its position in that structure, is again represented by an aspect, the structure aspect. In other words, the structure aspect represents the *node* in which the respective object is placed in that structure. By adding structure aspects to an aspect object, the object can be placed in several structures, or even in several positions within the same structure. Thus the hierarchical dependency between objects in a certain structure, i.e. the parent-child relations between the objects in this structure, is governed by links between the individual objects' structure aspects.

Therefore, the aspects of an object play a central role for generating a new structure. For example, in order to create a new second structure from an already existing first structure, the method according to the invention makes use of the first structure and adds to one or several or all objects of that structure a second structure aspect. Fig. 2 illustrates this transition from an object 2 with its various aspects including a first structure aspect 3 to the same object with a second structure aspect 4 added. Furthermore, the method creates links between the second structure aspects of the different objects, thus creating the second structure.

In the most straightforward implementation, the links between the second aspects are identical to the links between the first aspects, thus the second structure is identical to the first structure. For example, if there are three objects A, B, C in the first structure, all of them are not only present in the second structure but also their interrelations remain the same, i.e. they are grouped in the same way. In a more general implementation, the second structure differs from the first structure in that the links of the first structure aspects and the links of the second structure aspects differ depending on the semantics of the first aspect and the second aspect. Using the example mentioned above, this means that the objects A, B, C are all still present in the second structure but their interrelations have changed, i.e. they are grouped differently.

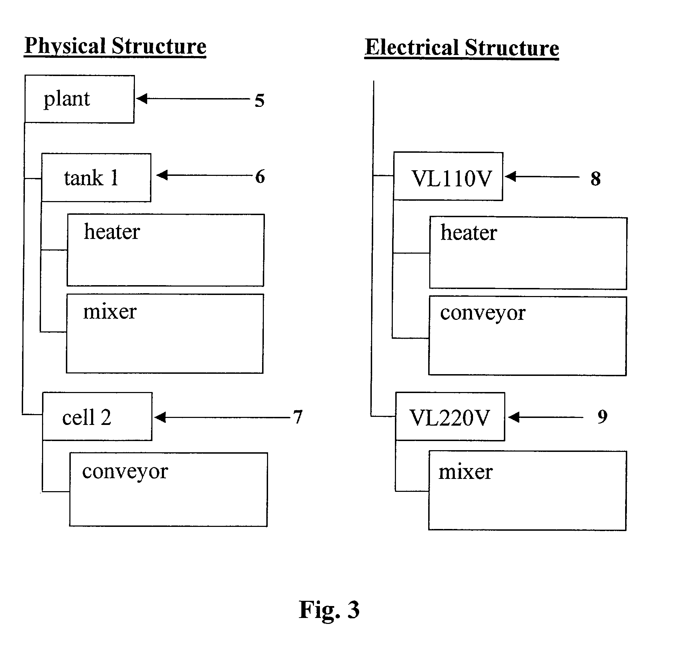

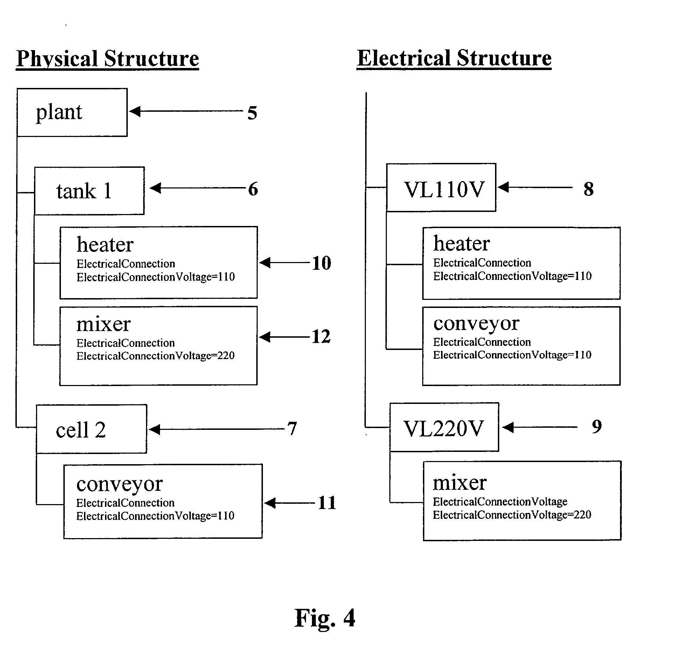

Fig. 3 illustrates an even more general implementation. Depending on the type of the first aspect and the type of the second aspect, the method according to the invention has not only omitted some objects altogether while creating second structure aspects but has also added new objects while creating second structure aspects. As can be seen, the objects 5, 6, 7 in the first structure (the *Physical Structure*) have been dropped in the second structure (the *Electrical Structure*) whereas objects 8, 9 which had not been present in the first structure have been added to the second structure. This will be explained in further detail below in connection with Fig. 4. Thus, generating a new structure from an existing structure can involve not only creating new structure aspects in objects that have already been present in the existing structure but can additionally involve defining new objects for the new structure.

The way the second structure is defined makes use of a *Generating Expression* with multiple input parameters. This expression is a function with multiple input parameters each of which covers certain information about the system and can be formulated using any programming language (an example will be given below) and makes, among other information, use of
- domain specific databases,
- domain specific rule bases
- domain specific object type systems,
- symbolic parameter values taken from the objects in the first structure,
- graph grammars,
- an API (application program interface).

For example, a symbolic parameter value taken from an object in the first structure can be the *inheritance* of an aspect. A code example will make the concept of the generating expressions and their input parameters more clear. Fig. 4 illustrates the role of the generating expressions in the structure generation process from Fig. 3, i.e. the generation of the *Electrical Structure* as the second structure from the *Physical Structure* as the first structure. As already mentioned in connection with Fig. 3, some objects in the first structure have been dropped in the second structure whereas some objects which had not been present in the first structure have been added to the second structure. In the second structure all objects with electrical connections, i.e. Heater 10, Conveyor 11, and Mixer 12, are placed as child nodes to parent nodes 8 and 9, representing the corresponding group of devices having a voltage level of 110 V and 220 V, resp. This is achieved by defining for each object a new structure aspect which represents the location of this object in the new structure. The code to generate the second structure thus looks as follows ("//" denotes comments and "\" denotes continuation of line):

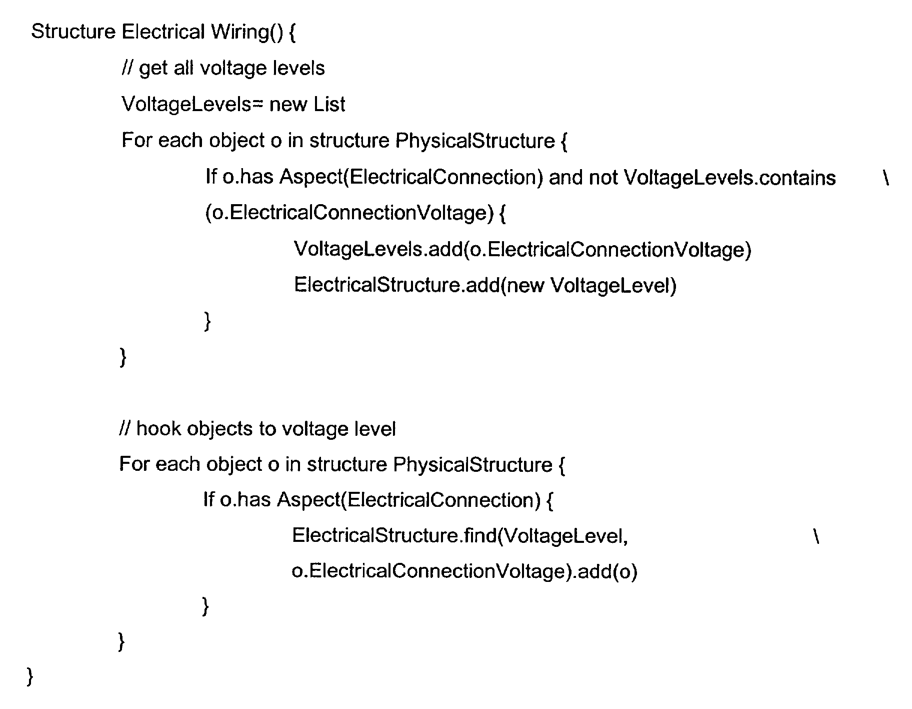

In the *Physical Structure* the objects are grouped according to their physical interrelation and not according to their voltage levels. In order to achieve such a grouping the code queries all objects in the *Physical Structure* for an electrical connection (i.e. for the aspect ElectricalConnection), adds the voltage level of this connection (i.e. the aspect ElectricalConnectionVoltage) to a list called VoltageLevels - if the object has an electrical connection at all and if the list does not already contain this voltage level - and creates a new object VoltageLevel from the entry in the list in the *Electrical Structure.* Finally the code links the objects in the *Physical Structure* that have an electrical connection (i.e. the aspect ElectricalConnection) with a certain voltage level (i.e. the aspect ElectricalConnectionVoltage) as child nodes in the *Electrical Structure* to the corresponding newly created objects VoltageLevel that have the aspect representing the corresponding voltage level (ElectricalConnectionVoltage) as parent nodes.

This example covers the case that new objects - containing new aspects - had to be created for generating the new structure. As already mentioned, other cases are possible where no new objects are created but only new aspects in already existing objects. All cases have in common that in order to generate a new structure at least one already existing structure is necessary and that new aspects have to be created in some objects.

By the method according to the invention it is achieved that real world objects in an existing structure are not only automatically re-organized in a new structure but some objects that are important in the first structure can be dropped in the second structure and, if necessary, new objects that are relevant to the grouping in the second structure can be created in the second structure.

Thus, if an engineer wants to reorganize the pieces of process equipment in a plant in order to control the plant under a different aspect, he does not have to work on every single object and redefine its position in the respective structure, i.e. manually generate a new structure. Instead, he uses the method according to the invention that automatically checks the aspects of the original objects and links the objects to the new structure according to the newly created structure aspects.

An additional feature of the invention is the way the expressions to generate the second structure are used - *dynamically* or *statically.* In both cases the expression is a query on aspect objects in the first structure and/or additional information sources and results in a second structure with new structure aspects and/or objects added or deleted, as has been explained above. In the dynamical case the returned structure is only an instantaneous (and thus transient) query result depending on the point of time when it was generated, whereas in the statical case the returned structure is added as another persistent structure to the system. In this case update and consistency mechanisms can be used to ensure that any object that is later added to the first structure, i.e. after the second structure has already been generated, can still be taken into account for the second structure because the new object will automatically be subjected to the evaluation of the relevant structure building expressions. An example for such a consistency mechanism is the "Publisher-Subscriber" concept as described in Erich Gamma et al.: *Design Patterns* (Addison Wesley, 1995). In this way the second structure will be automatically updated.

So far only the generation of a second structure from a first structure has been explicitly described. Nevertheless it is obvious for one skilled in the art that the method and the system according to the invention can also be used to generate second structures making use of multiple existing (first) structures and multiple additional information sources without leaving the inventive concept. Furthermore, the usage of other than the explicitly mentioned information sources as additional input parameters for the generating expressions can be envisaged.

## Claims

1. Method to generate a new structure from at least one already existing structure in a computerized system, wherein each structure consists of composite objects each of which represents a real world object and which contains aspects representing facets of the real world object as well as structure aspects representing the location of the composite object in particular structures,
**characterized in that**
the method uses a generating expression to derive the new structure and the relevant information to fill that new structure from the at least one existing structure and comprises the following steps of:
- querying objects (1; 2; 5-7, 10-12) in the at least one existing structure for at least one aspect that is relevant to the new structure,
- linking said objects containing at least one aspect that is relevant to the new structure to the new structure by creating a new structure aspect (4) for these objects, and
- linking the objects to each other in the new structure in a directed acyclic graph according to the semantics of their respective new structure aspects (4).

2. Method according to claim 1, **characterized in that** it comprises the further step of creating new objects (8, 9) in the new structure from querying the objects (1; 2; 5-7, 10-12) in the at least one existing structure for at least one aspect that is relevant to the new structure.

3. Method according to claim 1 or 2, **characterized in that** it uses additional information sources describing information about a system, such as domain specific databases, domain specific rule bases, domain specific object type systems, symbolic parameter values, graph grammars or APIs to generate the new structure.

4. Method according to one of the preceding claims, **characterized in that** the generated new structure and its generating expression are added persistently to the computerized system and that update and consistency mechanisms can be used to integrate an object in the new structure that has been added to the at least one already existing structure after the new structure has been generated.

5. A computer program product code means stored in a computer readable medium in a computerized system for performing the method of any of the preceding claims when said program product is run on a computer.
